Europäisches Patentamt

European Patent Office

Office européen des brevets

(19)

(11) Publication number: **0 072 666**

**A1**

(12) # EUROPEAN PATENT APPLICATION

(21) Application number: **82304248.6**

(22) Date of filing: **11.08.82**

(51) Int. Cl.³: **F 16 C 27/06**
**F 16 F 1/38, F 16 C 11/04**

(30) Priority: **11.08.81 GB 8124565**

(43) Date of publication of application:
**23.02.83 Bulletin 83/8**

(84) Designated Contracting States:
**DE FR IT SE**

(71) Applicant: **BTR plc**
**Silvertown House Vincent Square**
**London SW1(GB)**

(72) Inventor: **Chambers, Anthony Frederick**
**Hanover Square East**
**Warleigh, Bath, Avon(GB)**

(72) Inventor: **Hunt, Kenneth Vivian**
**8 Hampton Close**
**Bowerhill, Melksham, Wilts(GB)**

(74) Representative: **Mayes, Stuart David et al,**
**BOULT, WADE & TENNANT 27 Furnival Street**
**London, EC4A 1PQ(GB)**

(54) **Improvements in bushes.**

(57) A bush has a rigid tubular inner sleeve (11), a tubular body of resilient elastomeric material (13) extending around and secured to the inner sleeve and an outer shell (14) secured to the outside of the body of elastomeric material. The bush fits into a housing (17) in such a way that the body of elastomeric material is compressed, and hence, stress-relieved. The bush is located axially in position in the housing by means of a circumferential rib (16) which engages a slot.

FIG.4.

EP 0 072 666 A1

0072666

## IMPROVEMENTS IN BUSHES

The invention relates to bushes and more particularly but not exclusively to bushes of the type designed to accommodate torsion, axial, radial and conical displacements.

According to the invention there is provided bearing means comprising a bush and a housing the bush having a rigid tubular sleeve, a tubular body of resilient elastomeric material extending around and secured to the sleeve and such means secured to the outside of the body of elastomeric material, the outer circumferential size of the bush being greater than the inner circumferential size of the housing, the bush being resiliently reducible in outer circumferential size with corresponding stress relief of the body of elastomeric material, such reduction being effected when the bush is inserted into the housing, engagement means being provided on the outer circumference of the bush engagable with complementary engagement means on the inner circumference of the housing for axially locating the bush in position in the housing.

0072666

The shell means may comprise a tubular member which is of resilient plastics material to allow the tubular member to be resiliently reducible in outer circumferential size, in which case the outer profile of the tubular member may be circular and the plastics material may be nylon.

Alternatively, the shell means may comprise a plurality of part tubular, rigid shell portions each extending axially of the bush, the arrangement being such that before insertion of the bush into the housing there is a circumferential gap between adjacent shell portions but that when the bush is inserted into the housing adjacent shell portions are urged radially inwardly and the body of elastomeric material is compressed. In this case, the outer profile of the shell portions may be circular or non-circular when inserted in the housing.

The sleeve may have a central portion having a substantially spherical outer profile.

The engagement means on the bush may comprise rib means and the complementary engagement means on the housing may comprise groove or slot means, or vice versa.

The rib means and groove means may extend substantially fully circumferentially around their

0072666

respective parts.

By way of example, three embodiments of the invention will now be described with reference to the accompanying drawings, in which:-

Figure 1 is a sectional side view of a bush along the lines I-I in Figure 2;

Figure 2 is a sectional view along the lines II-II in Figure 1;

Figure 3 is a front view of the bush of Figures 1 and 2 located in a housing;

Figure 4 is a sectional view of the bush of Figures 1 and 2 located in a housing;

Figure 5 is a front view of a second embodiment of a bush ;

Figure 6 is a sectional view of a third embodiment of a bush;

Figure 7 is a front view of the bush of Figure 6; and

Figure 8 is a sectional view of the bush of Figures 6 and 7 located in a housing.

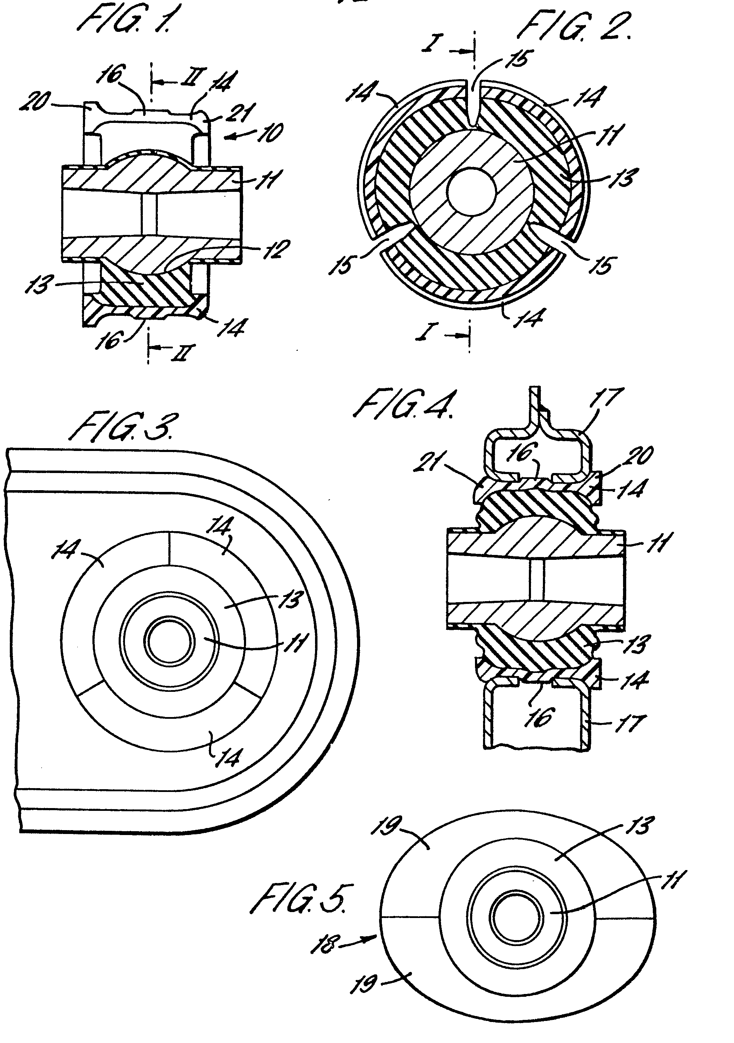

As shown in Figure 1, a bush is generally indicated at 10. The bush 10 comprises an inner sleeve 11 of metal or high strength plastics material, or indeed a composit of both. Where the sleeve 11 is of metal it is conveniently made of a high strength low weight alloy.such as an aluminium alloy. The sleeve 11 has an inner diameter which tapers towards the centre of the sleeve and a centre portion which has a substantially spherical outer profile 12. It will be appreciated that different shapes or profiles of sleeve 11 may be used.

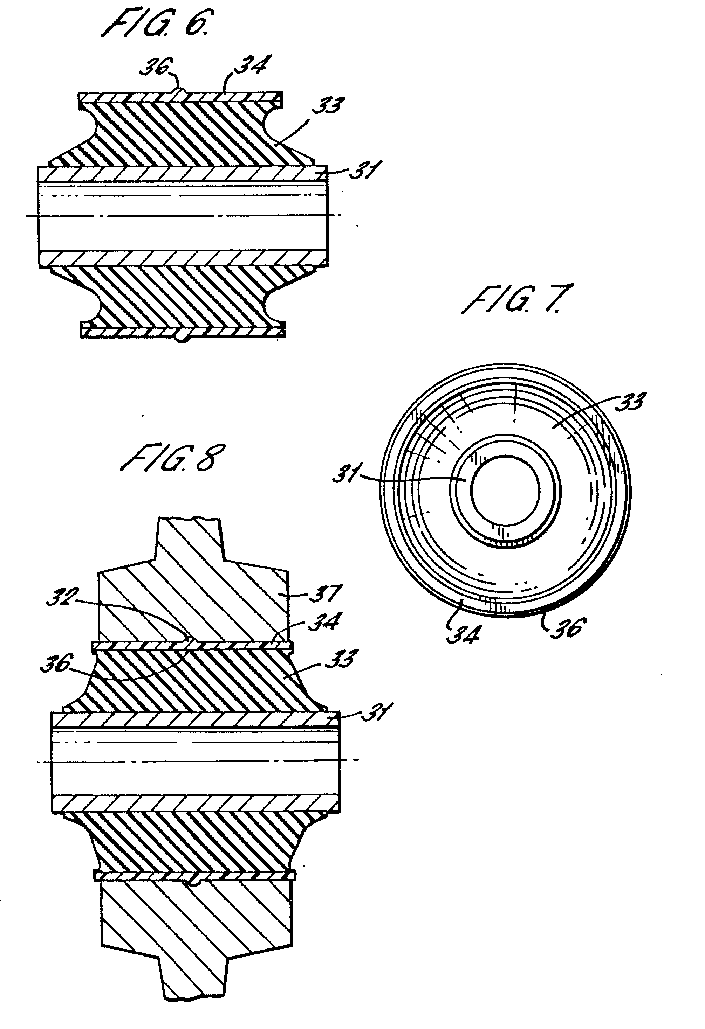

Bonded to the sleeve 11 is a tubular body of resilient, elastomeric material 13. The elastomeric material is preferably rubber. To the outside of the body 13 of elastomeric material are bonded three shell portions 14 of rigid material, such as high strength plastics material or a lightweight metal, for example an alluminium alloy. The shell portions 14 are of a radius such that when the bush is inserted in a housing and the outer shell consisting of the shell portions 14 is compressed, a cylindrical shell is formed. Grooves 15 are formed in the body of elastomeric material 13 to allow deformation of the material of the body 13 when the shell portions 14 are urged radially inwardly upon insertion of the bush into a housing. Figure 3 shows a front view of a bush located in a housing and this view illustrates the formation of a cylindrical outer shell from the shell portions 14.

As shown in Figures 1 and 4, the shell portions 14 have an outer profile including a circumferentially extending rib 16. The rib 16 is designed to engage a recess or gap in a housing so that axial location of the bush is ensured. In the embodiment of Figure 4 a housing defined by a metal formation 17 has a circumferential gap into which the rib 16 locates. It will be appreciated that this means of axial location could equally well be provided by having the rib feature on the inner circumference of the housing and the complementary groove feature on the outer circumference of the shell portions.

Figure 5 shows an alternative embodiment of a bush generally indicated by reference numeral 18, which is designed to fit into an oval housing. The bush 18 is shown in a compressed state as if it were fitted into a housing and comprises two shell portions 19 which are bonded to the body 13 of elastomeric material which is in turn bonded to the sleeve 11 as in the previous embodiment. Again, the bush is axially located in the housing by means of a rib and complementary groove on the bush and housing respectively or vice versa. The embodiment of the Figure 5 is particularly useful where torsional resistance is required.

The spherical outer profile 12 of the sleeve 11 allows high conical movements to be accomodated by the bush, but the spherical profile may be omitted if large conical movement is not a requirement. Similarly, the profile of the bore of the sleeve 11 may be cylindrical rather than tapered.

As can be seen in Figures 1 and 4, the shell portions 14 have end portions 20 and 21 of thicker section. These portions 20 and 21 provide increased rigidity and prevent undesirable bending after assembly and in service. It will be appreciated that other external profile for the shell portions 14 could be used.

Figures 6, 7 and 8 show a further embodiment of a bush. The bush has a round tubular outer shell 34 which is of plastics material, preferably nylon. The outer shell 34 is bonded to a body of elastomeric material 33 which in turn is bonded to an inner shell 31. For reasonable fatigue life, the body of elastomeric material 33 should be stress relieved after moulding to reduce the tension stresses resulting from thermal shrinkage. Since the outer shell is of plastics material, the bush can be pressed directly into a housing 37 whereby, with appropriate interference, the outer shell 34 reduces in size thus imparting compression and hence stress relief to the body of elastomeric material 33.

The bush shown in Figures 6, 7 and 8 has a rib 36 extending around the circumference of the outer shell 34. The housing 37 has a complementary groove 32 extending around its inner circumference, the rib of the bush being received in this groove when the bush is pressed into the housing for axially located the bush in the housing. It will be appreciated that the rib may alternatively be provided on the inner circumference of the housing, in which case the bush would have the complementary groove.

It will also be appreciated in each embodiment that the axially locating ribs and grooves need not necessarily extend fully around the circumference, and that more than one rib and complementary groove may be provided for each bush and housing assembly.

**0072666**

CLAIMS

1.    Bearing means comprising a bush (10) and a housing (17) the bush having a rigid tubular sleeve (11), a tubular body of resilient elastomeric material (13) extending around and secured to the sleeve and shell means (14) secured to the outside of the body of elastomeric material, characterised by the circumferential size of the bush being greater than the inner circumferential size of the housing, the bush being resiliently reducible in outer circumferential size with corresponding stress relief of the body of elastomeric material, such reduction being effective when the bush is inserted into the housing, engagement means (16) being provided on the outer circumference of the bush engagable with complementary engagement means on the inner circjmference of the housing for axially locating the bush in position in the housing.

2.    Bearing means as claimed in claim 1 wherein the shell means comprises a tubular member which is of resilient plastics material to allow the tubular member to be resiliently reducible in outer circumferential size.

3.    Bearing means as claimed in claim 2 wherein the outer profile of the tubular member is circular and the plastics material is nylon.

4.    Bearing means as claimed in claim 1 wherein the shell means comprises a plurality of part tubular, rigid shell portions (14) each extending axially of the bush, the arrangement being such that before insertion, the bush into the housing there is a circumferential gap (15) between adjacent shell portions but that when the bush is inserted into the housing adjacent shell portions are urged axially inwardly and the body of elastomeric material is compressed.

5.    Bearing means as claimed in claim 4 wherein the outer profile of the shell portions is circular when inserted in the housing.

6.    Bearing means as claimed in claim 4 wherein the outer profile of the bush is non-circular when inserted in the housing.

7.    Bearing means as claimed in claim 4, claim 5 or claim 6 wherein the sleeve has a central portion having a substantially spherical outer profile.

8.    Bearing means as claimed in any preceding claim wherein the engagement means on the bush comprises rib means and the complementary engagement means on the housing comprises groove or slot means.

9.    Bearing means as claimed in any one of claims 1 to 7 wherein the engagement means on the bush comprises groove means and the complementary engagement means on the housing comprises rib means.

10.    Bearing means as claimed in claim 8 or claim 9 wherein the rib means and groove means extend substantially fully circumferentially around their respective parts.

0072666

FIG. 1.

FIG. 2.

FIG. 3.

FIG. 4.

FIG. 5.

FIG. 6.

36  34

33

31

FIG. 7.

33

31

34  36

FIG. 8

32

37

34

36

33

31

# EUROPEAN SEARCH REPORT

**European Patent Office**

0072666

Application number

EP 82 30 4248.6

| | DOCUMENTS CONSIDERED TO BE RELEVANT | | | CLASSIFICATION OF THE APPLICATION (Int. Cl. ³) |
|---|---|---|---|---|
| Category | Citation of document with indication, where appropriate, of relevant passages | | Relevant to claim | |
| Y | CH − A − 281 829 (G.S. MOULTON & CO. LTD.) <br> * claim; sub-claims 3, 4; fig. 1 to 14 * <br> −− | | 1,2,8, <br> 9 | F 16 C 27/06 <br> F 16 F 1/38 <br> F 16 C 11/04 |
| Y | DE − U − 7 126 239 (GETEFO GESELLSCHAFT FÜR TECHNISCHEN FORTSCHRITT MBH) <br> * claim 1; fig. 1, 2 * <br> −− | | 1,2,4, <br> 5,8 | |
| Y | GB − A − 1 143 670 (DAIMLER-BENZ AG) <br> * claims 1 to 5; fig. 1 to 7 * <br> −− | | 1,2,4, <br> 5,8,9 | TECHNICAL FIELDS SEARCHED (Int.Cl. ³) |
| A | DE − A − 1 918 129 (MESSERSCHMITT-BÖLKOW-BLOHM GMBH) <br> * claims 1, 4, 7; fig. 1 to 4 * <br> −− | | 1,2,4, <br> 5,7 | F 16 C 11/00 <br> F 16 C 27/00 <br> F 16 F 1/00 |
| A | DE − A − 2 017 205 (CLEVITE CORP.) <br> * claim 1; fig. 1 to 4 * <br> & GB − A − 1 267 476 <br> −− | | 1,2,6 | |
| A | FR − A − 1 432 449 (STA APPLICAZIONI GOMMA ANTIVIBRANTI SAGA S.p.A.) <br> * fig. 1 to 4 * <br> −− | | 1,2,4, <br> 5 | CATEGORY OF CITED DOCUMENTS |
| A | GB − A − 1 131 608 (SALZGITTER MASCHINEN AG) <br> * claims 1 to 3; fig. 1 to 6 * <br> −− | | 1,2,4, <br> 5 | X: particularly relevant if taken alone <br> Y: particularly relevant if combined with another document of the same category <br> A: technological background <br> O: non-written disclosure <br> P: intermediate document |
| A | GB − A − 1 221 157 (STA APPLICAZIONI GOMMA ANTIVIBRANTI SAGA S.p.A.) <br> * page 2, lines 11 to 15; fig. 1 to 4 * <br> −−−− | | 1−3 | T: theory or principle underlying the invention <br> E: earlier patent document, but published on, or after the filing date <br> D: document cited in the application <br> L: document cited for other reasons |

X The present search report has been drawn up for all claims

&: member of the same patent family, corresponding document

| Place of search | Date of completion of the search | Examiner |
|---|---|---|
| Berlin | 29-10-1982 | MASSALSKI |

EPO Form 1503.1 08.78